# EUROPEAN PATENT SPECIFICATION

(11) **EP 3 193 228 B1**
(45) Date of publication and mention of the grant of the patent: **21.11.2018**
(21) Application number: 17151149.6
(22) Date of filing: 12.01.2017
(51) Int. Cl.: B60Q 1/00, B64D 47/02, B64D 47/06, H05B 37/02

(54) **METHOD OF AUTONOMOUSLY OPERATING AN AIRCRAFT LIGHTING SYSTEM AND AUTONOMOUS EXTERIOR AIRCRAFT LIGHT**
VERFAHREN ZUM AUTONOMEN BETREIBEN EINES FLUGZEUGBELEUCHTUNGSSYSTEMS UND AUTONOME ÄUSSERE FLUGZEUGBELEUCHTUNG
PROCÉDÉ DE FONCTIONNEMENT AUTONOME D'UN SYSTÈME D'ÉCLAIRAGE D'AÉRONEF ET LUMIÈRE EXTÉRIEURE D'AÉRONEF AUTONOME

(30) Priority: 15.01.2016 DE 102016100650
(43) Date of publication of application: 19.07.2017
(73) Proprietor: Goodrich Corporation, Charlotte, NC 28217-4578 (US)
(72) Inventor: LECLEAR, Ronald J., Avon, CT Connecticut 06001 (US); HESSLING-von HEIMENDAHL, Andre, 56073 Koblenz (DE)
(74) Representative: Schmitt-Nilson Schraud Waibel Wohlfrom Patentanwälte Partnerschaft mbB

(56) References cited:
- US-A- 4 736 907
- US-A- 5 206 644
- US-A1- 2012 133 283
- US-B1- 6 252 525

## Description

The present invention is in the field of exterior aircraft lighting. In particular, it is in the field of operating such exterior aircraft lighting systems.

In general, pilots have a large number of tasks to take care of during operation of an aircraft. Modern aircraft have many technical subsystems, and the pilot(s) need to ensure that all of these technical subsystems, in particular the safety-critical subsystems, are in an appropriate operating state throughout the operation of the aircraft. In particular, the pilots are supposed to ensure that the technical subsystems are in an appropriate operating state at any given point in time during the operation of the aircraft. This results in a high workload for the pilot(s) of the aircraft. This workload is particularly burdensome in the approach phase to an airport. Another example of flight situations with particularly high workloads are emergency situations. A particularly extreme example of such an emergency situation is an uncontrolled descent or a controlled, but maximally quick descent, e.g. due to loss of cabin pressure. In such situations, there is a very large number of tasks that a pilot has to carry out concurrently.

US 2012/133283 A1 discloses an airborne vehicle lighting control apparatus and method for automatically controlling activation and deactivation of an airborne vehicle lighting system. It discloses sensors for sensing a current flight operating mode and geographical position of an vehicle, and a processor for activating or deactivating lighting based on the current flight operating mode and position.

US 5,206,644 A discloses a system and method for extending the useful life of anti-collision lights comprising inert gas flash tubes and which are included on commercial, military, and business jet aircraft. When the aircraft is cruising in high altitude tightly controlled airspace (where instrument flight rules are controlling, i.e., at altitudes above 18,000 feet), and when the aircraft is not undergoing a substantial change in altitude, the power input to the anti-collision lights is reduced. The reduction in the power provides a significant increase in the useful life of the flash tube while causing only slight reduction in the intensity of the light output of the flash tube.

US 4,736,907 A discloses a process and apparatus for preventing bird collisions. The collision of birds with aircraft is prevented by means of at least one light source installed on an aircraft which produces light flashes. The frequency of the light flashes produced thereby is varied during at least one cycle time period. The frequency of light flashes is advantageously continuously increased one or more times in a range of from approximately 0.1 Hz to 3.0 Hz, and the maximum frequency may then be maintained. Two such light sources are preferably visible to the birds.

Accordingly, it would be beneficial to reduce pilot workload during operation of an aircraft.

Exemplary embodiments of the invention include a method of autonomously operating an aircraft lighting system, as claimed in claims 1, 5, and 9, and an aircraft lighting system, as claimed in claim 15. Further embodiments of the invention are given in the dependent claims.

Exemplary embodiments of the invention include a method of autonomously operating an aircraft lighting system, the aircraft lighting system comprising at least one autonomously operated exterior aircraft light, with each of the at least one autonomously operated exterior aircraft light having at least two operating states, the method comprising the steps of determining a momentary value of at least one of a group of aircraft operation parameters consisting of height above ground, rate of descent, ground speed, and weight on wheels; for each of the at least one autonomously operated exterior aircraft light, selecting a particular operating state from the at least two operating states depending on the momentary value of the at least one of the group of aircraft operation parameters; and controlling each of the at least one autonomously operated exterior aircraft light in accordance with the particular operating state selected.

Exemplary embodiments of the invention allow for reducing the pilot workload by autonomously operating one or more exterior aircraft lights, i.e. by operating one or more exterior aircraft lights without pilot interaction, on the basis of one or more aircraft operation parameters that are readily available, e.g. in a board computer of the aircraft. The aircraft operation parameters are readily available in a machine-readable format and can therefore be processed on a machine level without pilot interaction. As the appropriate operating state for a given operating condition is selected without pilot interaction, the pilot(s) is/are relieved from the task of manually operating the one or more autonomously operated exterior aircraft lights, thus being able to concentrate more of their capacities / awareness to other tasks. The method according to exemplary embodiments of the invention contributes to a more reliable operation of the one or more autonomously operated exterior aircraft lights on the one hand, because the pilot(s) does / do not need to think about that task, and to an overall safer operation of the aircraft on the other hand, because the pilot(s) has / have more capacities for other tasks.

The term autonomously operated exterior aircraft light refers to an exterior aircraft light that has an autonomous operation mode, i.e. an operation mode where the operating state is machine-selected without pilot interaction, i.e. autonomously selected. The term does not require the exterior aircraft light in question to always be operated without pilot interaction. It is possible that the pilot overrides the selection of the particular operating state manually. It is also possible that the exterior aircraft light in question is operated manually at certain times of the flight and/or in certain operating conditions. However, the term autonomously operated exterior aircraft light requires the presence of an autonomous operation mode, wherein an appropriate operating state out of a plurality of operating states is machine-selected depending on the momentary value of one or more aircraft operation parameters.

The exterior aircraft lighting system of the aircraft, in which the method according to exemplary embodiments of the invention is carried out, may have one autonomously operated exterior aircraft light or a plurality of autonomously operated exterior aircraft lights. In particular, one or all or any subset of the exterior aircraft lights of the aircraft in question may be autonomously operated exterior aircraft lights. Accordingly, it is possible that one or more of the exterior aircraft lights of the aircraft in question are not autonomously operated, but are manually operated lights.

The aircraft operation parameters are parameters that may be determined during flight and/or on the ground. In other words, the aircraft operation parameters may describe the particular flight condition and/or the particular ground condition that the aircraft is in. The parameter weight on wheels may be a value indicating a measurement of the weight that is supported on the wheels of the aircraft. However, it is also possible that the parameter weight on wheels is a binary parameter indicating whether or not there is weight on wheels, i.e. whether the wheels and their supporting structure support a portion or all of the weight of the aircraft or no weight at all. The aircraft operation parameters may be determined via suitable sensors. It is also possible that the aircraft operation parameters are merely fetched from the board computer of the aircraft in the framework of the method according to exemplary embodiments of the invention.

The at least two operating states of the autonomously operated exterior aircraft light may be any two or more of an on state, an off state, an emergency illumination state, and other suitable operating states of the exterior aircraft light in question. Depending on the type of exterior aircraft light and the particular embodiment thereof for a given aircraft lighting system, the exterior aircraft light may have an on state and an off state only. However, it is also possible that the exterior aircraft light in question has various operating states, e.g. one or more additional operating states in addition to the on state and the off state. It is further possible that the exterior aircraft light in question has more than two operating states, but that only two of those operating states are available for the autonomous selection of the appropriate state.

The method according to exemplary embodiments of the invention may be carried out by any suitable means, such as a board computer of the aircraft and/or a dedicated control unit for the aircraft lighting system. It is further possible that the method is only carried out upon a particular command, such as when the pilot enters an auto mode for the exterior aircraft lighting system of the aircraft.

The aircraft may be an air plane or a helicopter.

According to a further embodiment, the at least one autonomously operated exterior aircraft light comprises at least one normally on exterior light, having a normal on state and an emergency flashing state. The method may comprise the steps of determining the momentary value of the rate of descent; comparing the momentary value of the rate of descent with a predetermined descent rate threshold value; selecting the emergency flashing state for the at least one normally on exterior light, if the momentary value of the rate of descent exceeds the predetermined descent rate threshold value; and controlling the at least one normally on exterior light to emit a flashing light emission pattern in the emergency flashing state. The predetermined descent rate may be an emergency descent rate, i.e. a descent rate that is not used during regular approaches to airports or the like and that is thus associated with an emergency condition. By operating one or more normally on exterior lights in a flashing mode, i.e. by having normally on exterior lights emit a sequence of light pulses, the aircraft may draw more attention to its position and may signal its emergency descent. The observer of the aircraft may interpret this flashing as an emergency signal, because he/she sees a sequence of flashes from exterior aircraft lights that usually emit a continuous light stream. Reliably signalling a quick descent to the environment greatly contributes to flight safety, because aircraft "falling" through various flight corridors defined on top of each other are a large safety concern. By autonomously entering such an emergency illumination state, the pilot(s) is / are freed of additional tasks with respect to maximizing the signalling of the emergency via the aircraft lighting system and can concentrate on dealing with the cause of the emergency. In this way, the flying safety is enhanced. The term normally on exterior light may refer to exterior aircraft lights that are usually switched on during every operation of the aircraft, such as navigation lights. It may also refer to exterior aircraft lights that are normally switched on during night flights, such as logo lights. It may also refer to exterior aircraft lights that are normally switched on in conditions of poor visibility.

According to a particular embodiment, the at least one normally on exterior light comprises at least one navigation light. Navigation lights are particularly well-suited for indicating an emergency, because they are designed for long range visibility and pilots of other aircraft expect them to provide continuous illumination of red, green and white, depending on the viewing direction, such that a flashing emission pattern attracts much attention. In addition / as an alternative, the at least one normally on exterior light may comprise at least one logo light.

According to a further embodiment, the at least one autonomously operated exterior aircraft light comprises at least one normally off exterior light, having a normal off state and an emergency illumination state, the method comprising the steps of determining the momentary value of the rate of descent; comparing the momentary value of the rate of descent with a predetermined descent rate threshold value; and selecting the emergency illumination state for the at least one normally off exterior light, if the momentary value of the rate of descent exceeds the predetermined descent rate threshold value. By using normally off exterior lights for signalling the emergency descent of the aircraft, the overall illumination emitted from the aircraft may be increased further in an emergency, thus maximizing the attention drawn to the aircraft. Again, this contributes to freeing the pilot(s) from dealing with the aircraft lighting system in an emergency conditions and to allowing the pilot(s) to deal with the cause of the emergency condition.

According to a particular embodiment, the at least one normally off exterior light may be controlled to continuously emit light in the emergency illumination state. In this way, the time-integrated illumination around the aircraft in an emergency descent may be maximized. In the alternative, the at least one normally off exterior light may be controlled to emit a flashing light emission pattern in the emergency illumination state. In this way, particular attention may be drawn to the aircraft due to the emission of additional light flashes from normally off exterior lights.

According to a particular embodiment, the at least one normally off exterior light is at least one of the group consisting of at least one wing scan light, at least one engine scan light, at least one runway turnoff light, and at least one cargo loading light. These exterior aircraft lights are commonly turned off during cruise flight or only turned on temporarily for inspection of the exterior structure of the aircraft during the flight, such as for scanning the wings and/or the engines for ice build up or other problems. Depending on the operating set-up of the aircraft, logo lights may also be viewed as normally off exterior lights.

According to a further embodiment, the at least one autonomously operated exterior aircraft light comprises at least one normally flashing exterior light, having a normal flashing state, in which a normal flashing light emission pattern is emitted, and an emergency illumination state, the method comprising the steps of determining the momentary value of the rate of descent; comparing the momentary value of the rate of descent with a predetermined descent rate threshold value; selecting the emergency illumination state for the at least one normally flashing exterior light, if the momentary value of the rate of descent exceeds the predetermined descent rate threshold value; and controlling the at least one normally flashing exterior light to emit an emergency flashing light emission pattern different from the normal flashing light emission pattern in the emergency illumination state. By altering the flashing pattern of the normally flashing exterior lights, the emergency state of the aircraft may also be reliably signalled to surrounding aircraft. Again, by autonomously entering this altered operated state, the pilot is freed from changing the operating state of the normally flashing exterior light in question manually. The emergency flashing light emission pattern may differ from the normal flashing light emission pattern in a number of ways. For example, the flash rate may be increased, such as doubled. Also, the flash duration may be adapted. Further the flash rate may be adapted to a value that is outside the regular flash rate of between 40 flashes per minute and 100 flashes per minute. Yet further, when a plurality of normally flashing exterior lights are autonomously controlled to emit respective emergency flashing light emission patterns, these patterns may be configured to jointly exceed the limit value of 180 flashes per minute, usually required for any given angular direction in overlapping sectors of different exterior aircraft lights.

According to a particular embodiment, the at least one normally flashing exterior light may comprise at least one anti-collision strobe light. Anti-collision strobe lights are particularly well suited for signalling the emergency state, as they are configured for long range visibility and are generally looked out for by pilots. Such anti-collision strobe lights commonly emit white-coloured light. Additionally / as an alternative, the at least one normally flashing exterior light may comprise at least one anti-collision beacon light. Such anti-collision beacon lights commonly emit red-coloured lights, and their flashing attracts much attention as well.

According to a further embodiment, the predetermined descent threshold value is between 15.24 m/s (3000 ft/min) and 35.56 m/s (7000 ft/min), in particular between 20.32 m/s (4000 ft/min) and 30.48 m/s (6000 ft/min), further in particular about 25.40 m/s (5000 ft/min). With these values a reliable detection is made possible whether the aircraft in question is in the course of a regular descent towards an airport or towards a lower flight corridor or whether the descent is unplanned in nature and may be the result of an emergency situation.

According to a further embodiment, the at least one autonomously operated exterior aircraft light comprises at least one landing light, having an on state and an off state. By autonomously controlling the at least one landing light of the aircraft and by autonomously selecting the appropriate one of the on state and the off state, the pilot's workload is reduced in the demanding phase of the airport approach and the reliability of appropriate landing light operation is increased.

According to a further embodiment, the method comprises the steps of determining the momentary value of the height above ground; comparing the momentary value of the height above ground with a predetermined height threshold value; selecting the on state for the at least one landing light, if the momentary value of the height above ground is below the predetermined height threshold value; controlling the at least one landing light to emit light in the on state. In this way, the switching on of the at least one landing light is reliably carried out in an autonomous manner without pilot interaction. The predetermined height threshold value may be between 2438 m (8000 ft) and 3658 m (12000 ft), further in particular about 3048 m (10000 ft).

According to a further embodiment, the method comprises the steps of determining the momentary value of the ground speed; comparing the momentary value of the ground speed with a predetermined ground speed threshold value; selecting the off state for the at least one landing light, if the momentary value of the ground speed is below the predetermined ground speed threshold value; and controlling the at least one landing light not to emit light in the off state. In this way, the at least one landing light is autonomously turned off in case the ground speed falls below the predetermined ground speed threshold value. The predetermined ground speed threshold value indicates that the aircraft is no longer in flight, but is taxiing on the ground. In particular, the predetermined ground speed threshold value may be between 5 m/s and 25 m/s, in particular about 15 m/s. In this way, the pilot(s) is/are freed from the task of switching off the landing light after the touchdown and may concentrate on the task of taxiing the aircraft to the gate / parking position.

In addition / as an alternative, the method may comprise the steps of determining the momentary value on weight of wheels; deriving a ground contact indication from the momentary value of the weight on wheels; selecting the off state for the at least one landing light, if the ground contact indication indicates ground contact; and controlling the at least one landing light not to emit light in the off state. In this way, the switching off of the landing light may be coupled the aircraft being on the ground and no longer being in flight. The momentary values of the aircraft operation parameters weight on wheels and ground speed may be used individually and independently for turning off the at least one landing light. It is also possible that both above described conditions need to be fulfilled in order to autonomously turn off the at least one landing light. The using of these two conditions may lead to a more reliable turning off of the landing light(s) after landing.

Exemplary embodiments of the invention further include an autonomous exterior aircraft light, having at least two operating states, wherein the autonomous exterior aircraft light is configured to operate in a particular operating state from the at least two operating states depending on a momentary value of at least one of a group of aircraft operation parameters consisting of height above ground, rate of descent, ground speed, and weight on wheels. The autonomous exterior aircraft light may comprise at least one light source, a lens cover, a power input for receiving power from an aircraft board network, a signal input for receiving said at least one of the group of aircraft operation parameters or a signal input for receiving an external control signal depending on the momentary value of said at least one of the group of aircraft operation parameters, and a control unit for controlling the light source in accordance with the data received via the signal input. Further, the autonomous exterior aircraft light may comprise an optical system arranged between the at least one light source and the lens cover for shaping the output light intensity distribution of the autonomous exterior aircraft light. The additional features, modifications and effects, described above with respect to the method of autonomously operating an aircraft lighting system, apply to the autonomous exterior aircraft light unit in an analogous manner.

According to a further embodiment, the at least two operating states comprise a normal operating state and an emergency operating state, with the exterior aircraft light being configured to operate in the emergency operating state upon the momentary value of the rate of descent exceeding a predetermined descent rate threshold value. The normal operating state may be any of the normal on, normal off, and normal flashing state, described above. Also, the emergency operating state may be any of the emergency flashing state and the emergency illumination state described above. The autonomous exterior aircraft light unit may be any of the navigation light, logo light, wing scan light, engine scan light, runway turnoff light, cargo loading light, anti-collision strobe light, and anti-collision beacon light, described above.

According to a further embodiment, the autonomous exterior aircraft light is a landing light and the at least two operating states comprise an on state and an off state, with the landing light being configured to operate in the on state upon the momentary value of the height above ground being below a predetermined height threshold value. In addition / alternatively, the landing light may be configured to operate in the off state upon the momentary value of the weight on wheels indicating ground contact and/or upon the momentary value of the ground speed being below a predetermined ground speed threshold value.

Further exemplary embodiments of the invention are described in detail below with respect to the accompanying drawings, wherein:
Fig. 1 shows an aircraft, including various exterior lights, in a schematic top view;
Fig. 2 shows the aircraft of Fig. 1 in a side view during an approach towards an airport;
Fig. 3 shows a flow diagram of a method in accordance with an exemplary embodiment of the invention; and
Fig. 4 shows a flow diagram of a method in accordance with another exemplary embodiment of the invention.

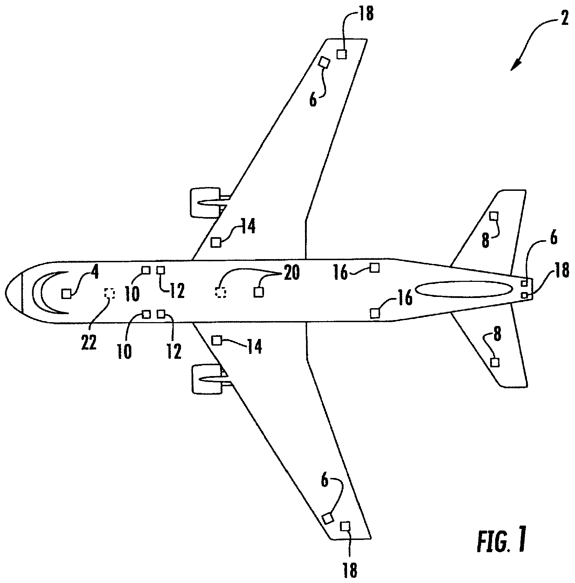

Fig. 1 shows an aircraft 2 and various components of an exterior aircraft lighting system of the aircraft 2. The exterior aircraft lighting system comprises a control unit 4 and a variety of exterior lights. The control unit 4 is configured to control the exterior lights of the aircraft 2, as described below. The aircraft 2 is an air plane in the exemplary embodiment of Fig. 1.

The aircraft 2 of Fig. 1 has a wide variety of exterior lights. In particular, the aircraft 2 has three navigation lights 6, two logo lights 8, two wing scan lights 10, two engine scan lights 12, two runway turnoff lights 14, two cargo loading lights 16, three anti-collision strobe lights 18, two anti-collision beacon lights 20, and a landing light 22. It is pointed out that these kinds of lights and their numbers are exemplary only and that the aircraft 2 may have additional lights that are not shown, such as taxi lights.

The three navigation lights 6 are positioned in the left and right wing tips as well as the tail of the aircraft 2. In normal flight conditions, each one of the navigation lights 6 emits light in one of the colors green, red and white, thus indicating to the aircraft environment if they are looking at the port side, starboard side or tail side of the aircraft. The navigation lights are normally on during all phases of the flight and in all flight conditions.

The logo lights 8 are directed to the vertical stabiliser of the aircraft 2 and are provided for illuminating the same, in particular for illuminating the logo commonly provided on the vertical stabiliser. The logo lights 8 are normally switched on for the entire duration of the flight during night flights. It is also possible that the logo lights are only used during taxing on the airport and are normally switched off during the flight.

The wing scan lights 10 and the engine scan lights 12 are positioned on the left and right sides of the aircraft fuselage, in front of the roots of the wings of the aircraft 2. The wing scan lights 10 and the engine scan lights 12 are normally off during the flight and may be switched on periodically or upon reasonable cause by the pilots or by the aircrew, in order to check the wings and the engines of the aircraft 2. The runway turnoff lights 14 are positioned in the roots of the wings. They are directed forwards and are normally switched off during the flight and switched on during taxiing, at least at night. The cargo loading lights 16 are positioned on the left and right sides of the aircraft fuselage, behind the wings and in front of tail structure of the aircraft 2. They are normally switched off during the flight of the aircraft 2.

The anti-collision strobe lights 18 are positioned in the left and right wing tips as well as at the tail of the aircraft 2. The anti-collision strobe lights 18 emit respective sequences of light flashes during normal operation of the aircraft 2. It is also possible that the anti-collision strobe lights 18 are only operated during night and bad weather conditions. The anti-collision beacon lights are positioned on the top and the bottom of the fuselage of the aircraft 2. They are arranged at the height of the wings in the longitudinal direction of the aircraft 2. While one of the anti-collision beacon lights 20 is disposed on the top of the fuselage, the other one of the anti-collision beacon lights 20 is disposed on the bottom of the fuselage and is therefore shown in phantom. The anti-collision beacon lights 20 are normally switched on during the flight. Their output is perceived as a sequence of light flashes in a given viewing direction.

The landing light 22 is attached to the front running gear of the aircraft 2, which is normally stored within the fuselage and is deployed during landing, taxiing and take off. As the landing light 22 is also arranged on the bottom of the aircraft 2, it is also shown in phantom.

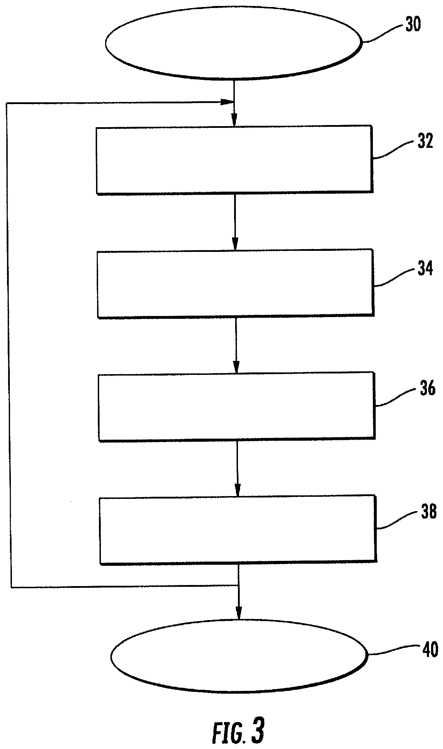

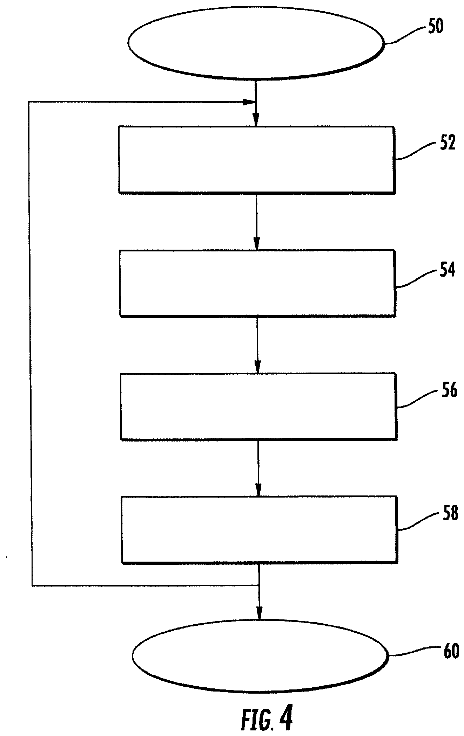

The control unit 4 operates the described aircraft lights in an autonomous manner, as will be described below with respect to Fig. 3 and 4. The control unit 4 is connected to the described light units for providing operation signals to them. These signals may be transmitted via suitable wires, which are not shown, or in a wireless manner or in a combination of those modes of transmission.

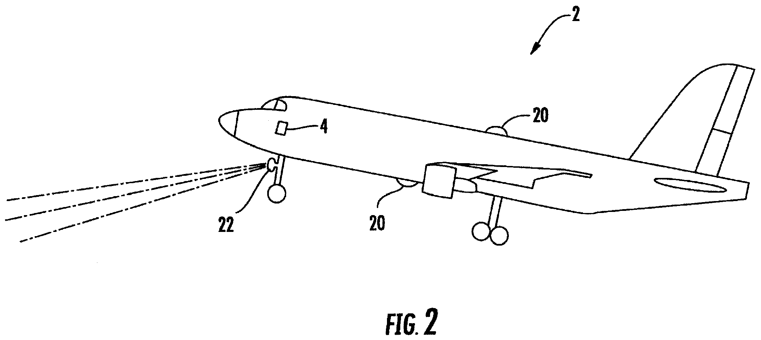

Fig. 2 shows the aircraft 2 of Fig. 1 in a side view, thus better illustrating the positions of the anti-collision beacon lights 20 and the landing light 22. The other exterior lights have been omitted from Fig. 2 for clear illustration.

Fig. 3 shows a flow diagram of a method of autonomously operating a navigation light in accordance with an exemplary embodiment of the invention. The autonomously operated navigation light may be any of the navigation lights 6, depicted in Fig. 1 for the exemplary aircraft 2. The method may be carried out by the control unit 4, as also depicted in Fig. 1 for the aircraft 2. The control unit 4 may be a designated control unit for the aircraft lighting system. It is also possible that the control unit 4 is part of the board computer of the aircraft 2.

The method starts at step 30. In particular, the method may start upon the beginning of the aircraft operation, such as upon the booting of the board computer of the aircraft. The further steps of the method may be carried out in predetermined time intervals or may be carried out upon suitable triggers, such as upon abrupt changes in aircraft operation parameters.

In step 32, the momentary value of the rate of descent of the aircraft is determined. This may be done by requesting a measurement from a suitable rate of descent sensor or by using the latest value of rate of descent values continuously provided by a suitable rate of descent sensor. It is also possible to access the momentary value of the rate of descent in the board computer of the aircraft, where this value is readily available.

In step 34, the momentary value of the rate of descent is compared with a predetermined descent rate threshold value. In the exemplary embodiment of Fig. 3, the predetermined descent rate threshold value is 25.40 m/s (5000 ft/min). In other words, it is determined in step 34 if the momentary value of the rate of descent exceeds the predetermined descent rate threshold value.

In step 36, a desired operating state, also referred to as a particular operating state or suitable operating state, is selected on the basis of the comparison of the momentary value of the rate of descent with the predetermined descent rate threshold value. In particular, if the momentary value of the rate of descent is below the predetermined descent rate threshold value, the normal on state of the navigation light is selected. In contrast thereto, if the rate of descent exceeds the predetermined descent rate threshold value, an emergency flashing state is selected for the navigation light.

In step 38, the navigation light is controlled in accordance with the selected operating state. In particular, if the normal on state has been selected in step 36, the navigation light is controlled to be in its normal on operating state, i.e. it is controlled to continuously emit light, as is common during the flight of the aircraft. In contrast thereto, if the emergency flashing state has been selected in step 36, the navigation light is controlled to emit a sequence of light flashes.

After the navigation light has been put into the desired operating state in step 38, the method returns to step 32 for the next iteration of method steps 32 to 38. The next iteration may follow immediately or may be carried out after a predetermined wait interval. When the aircraft is shut down, the method ends at step 40.

The described method may be carried out at all times during aircraft operation. However, it is also possible that the described method is carried out when the pilot puts the navigation light in question and/or all navigation lights and/or all exterior lights in an auto mode via a respective switch in the cockpit.

It is further possible that all navigation lights of the aircraft are controlled in step 38 in accordance with the result of step 36. Instead of / in addition to being applied to one or more navigation lights, the method as depicted in Fig. 3 and as described above may also be applied to one or more logo lights and/or other exterior lights that are normally on during regular flight conditions.

The method, as depicted in Fig. 3 and as described above, may also be applied to other exterior lights of the aircraft in a somewhat altered manner. For example, the method may be applied to one or more normally off exterior lights, such as one or more wing scan lights and/or one or more engine scan lights and/or one or more runway turnoff lights and/or one or more cargo loading lights. The selection of the appropriate operating mode in step 36 may then be a selection between a normal off state and an emergency illumination state. In step 38, the exterior light in question may then be controlled to be in the normal off state, if the momentary value of the rate of descent is below the predetermined descent rate threshold value. Further, the exterior light in question may be controlled to be in the emergency illumination state, if the momentary value of the rate of descent exceeds the predetermined descent rate threshold value. If the emergency illumination state is selected, the exterior light in question may be controlled to continuously emit light or may be controlled to emit a flashing light emission pattern.

The method, as depicted in Fig. 3 and as described above, may also be applied to normally flashing exterior lights in a somewhat altered manner. Examples of normally flashing exterior lights are anti-collision strobe lights and anti-collision beacon lights. In this case, the selection of the appropriate operating mode in step 36 may be the selection of a normal flashing state, in which a normal flashing light emission pattern is emitted, and an emergency illumination state, in which an emergency flashing light emission pattern different from the normal flashing light emission pattern is emitted. In step 38, the anti-collision strobe light in question or the anti-collision beacon light in question is controlled in accordance with the normal flashing light emission pattern or in accordance with the emergency flashing light emission pattern, dependent on the selection of step 36. The emergency flashing light emission pattern may have a flash rate that is twice as high as the flash rate of the normal flashing light emission pattern or any other suitable emergency flashing light emission pattern that is perceived as different by the aircraft environment.

Fig. 4 shows a flow diagram of a method of autonomously operating a landing light in accordance with an exemplary embodiment of the invention. The autonomously operated landing light may be the landing light 22, depicted in Fig. 1 for the exemplary aircraft 2. The method of Fig. 4 is generally similar to the method of Fig. 3, with the reference numerals of the individual steps being incremented by 20. Accordingly, unless not being applicable for logical reasons or described differently below, above description of Fig. 3 applies to the method of Fig. 4 in an analogous manner.

The method of Fig. 4 starts at step 50 upon the start of the aircraft at the gate or at the parking position. In step 52, the momentary values of the height above ground, the ground speed and the weight on wheels is determined. Again, the momentary values may be determined via suitable sensors or may be accessed in the board computer.

In step 54, the momentary value of the height above ground is compared with a predetermined height threshold value, which is 3048 m (10000 ft) in the exemplary embodiment of Fig. 4. Further, the ground speed is compared with a predetermined ground speed value, which is 15 m/s in the exemplary embodiment of Fig. 4. Yet further, it is determined from the momentary value of the weight on wheels, if the aircraft is on the ground or not. In other words, a ground contact indication is derived from the momentary value of the weight on wheels.

In step 56, a desired operating state of the landing light is selected on the basis of the comparisons carried out in step 54. In particular, a selection between an on state and an off state of the landing light is carried out in step 54. In step 56, the off state is selected in case the momentary value of the height above ground is above the predetermined height threshold value. The off state is also selected in case the momentary value of the height above ground is below the predetermined height threshold value and the momentary value of the ground speed is below the predetermined ground speed value and the weight on wheels indicates ground contact. The on state is selected in case the momentary value of the height above ground is below the predetermined height threshold value and not both of the following conditions are present: the momentary value of the ground speed is below the predetermined ground speed value and the weight on wheels indicates ground contact. In this way, the on state is selected for low altitude flight, such as during ascent or descent, and the off state is selected for cruise flight and on the ground for taxiing.

In step 58, the landing light is controlled in accordance with the selected operating state. In particular, the landing light is either switched on or off, depending on the selection of step 56.

After the landing light has been put into the desired operating state in step 58, the method returns to step 52 for the next iteration of method steps 52 to 58. The next iteration may follow immediately or may be carried out after a predetermined wait interval. When the aircraft is shut down, the method ends at step 60.

## Claims

1. Method of autonomously operating an aircraft lighting system, the aircraft lighting system comprising at least one autonomously operated exterior aircraft light (6, 8, 10, 12, 14, 16, 18, 20, 22), with each of the at least one autonomously operated exterior aircraft light having at least two operating states, the method comprising the steps of:
determining a momentary value of at least one of a group of aircraft operation parameters consisting of height above ground, rate of descent, ground speed, and weight on wheels,
for each of the at least one autonomously operated exterior aircraft light, selecting a particular operating state from the at least two operating states depending on the momentary value of the at least one of the group of aircraft operation parameters, and
controlling each of the at least one autonomously operated exterior aircraft light in accordance with the particular operating state selected,
**characterised in that**
the at least one autonomously operated exterior aircraft light comprises at least one normally on exterior light, having a normal on state and an emergency flashing state, the method comprising the steps of:
determining the momentary value of the rate of descent,
comparing the momentary value of the rate of descent with a predetermined descent rate threshold value,
selecting the emergency flashing state for the at least one normally on exterior light, if the momentary value of the rate of descent exceeds the predetermined descent rate threshold value, and
controlling the at least one normally on exterior light to emit a flashing light emission pattern in the emergency flashing state,
wherein the predetermined descent rate threshold value is between 15.24 m/s (3000 ft/min) and 35.56 m/s (7000 ft/min).

2. Method according to claim 1, wherein the at least one normally on exterior light is at least one of the group consisting of at least one navigation light (6) and at least one logo light (8).

3. Method according to claim 1 or 2, wherein the at least one autonomously operated exterior aircraft light comprises at least one normally off exterior light, having a normal off state and an emergency illumination state, the method comprising the step of:
selecting the emergency illumination state for the at least one normally off exterior light, if the momentary value of the rate of descent exceeds the predetermined descent rate threshold value.

4. Method according to any of the preceding claims, wherein the at least one autonomously operated exterior aircraft light comprises at least one normally flashing exterior light, having a normal flashing state, in which a normal flashing light emission pattern is emitted, and an emergency illumination state, the method comprising the steps of:
selecting the emergency illumination state for the at least one normally flashing exterior light, if the momentary value of the rate of descent exceeds the predetermined descent rate threshold value, and
controlling the at least one normally flashing exterior light to emit an emergency flashing light emission pattern different from the normal flashing light emission pattern in the emergency illumination state.

5. Method of autonomously operating an aircraft lighting system, the aircraft lighting system comprising at least one autonomously operated exterior aircraft light (6, 8, 10, 12, 14, 16, 18, 20, 22), with each of the at least one autonomously operated exterior aircraft light having at least two operating states, the method comprising the steps of:
determining a momentary value of at least one of a group of aircraft operation parameters consisting of height above ground, rate of descent, ground speed, and weight on wheels,
for each of the at least one autonomously operated exterior aircraft light, selecting a particular operating state from the at least two operating states depending on the momentary value of the at least one of the group of aircraft operation parameters, and
controlling each of the at least one autonomously operated exterior aircraft light in accordance with the particular operating state selected,
**characterised in that**
the at least one autonomously operated exterior aircraft light comprises at least one normally off exterior light, having a normal off state and an emergency illumination state, the method comprising the steps of:
determining the momentary value of the rate of descent,
comparing the momentary value of the rate of descent with a predetermined descent rate threshold value,
selecting the emergency illumination state for the at least one normally off exterior light, if the momentary value of the rate of descent exceeds the predetermined descent rate threshold value, and
controlling the at least one normally off exterior light to continuously emit light in the emergency illumination state or controlling the at least one normally off exterior light to emit a flashing light emission pattern in the emergency illumination state,
wherein the predetermined descent rate threshold value is between 15.24 m/s (3000 ft/min) and 35.56 m/s (7000 ft/min).

6. Method according to claim 5, wherein the at least one normally off exterior light is at least one of the group consisting of at least one wing scan light (10), at least one engine scan light (12), at least one runway turnoff light (14), and at least one cargo loading light (16).

7. Method according to claim 5 or 6, wherein the at least one autonomously operated exterior aircraft light comprises at least one normally on exterior light, having a normal on state and an emergency flashing state, the method comprising the steps of:
selecting the emergency flashing state for the at least one normally on exterior light, if the momentary value of the rate of descent exceeds the predetermined descent rate threshold value, and
controlling the at least one normally on exterior light to emit a flashing light emission pattern in the emergency flashing state.

8. Method according to any of claims 5 to 7, wherein the at least one autonomously operated exterior aircraft light comprises at least one normally flashing exterior light, having a normal flashing state, in which a normal flashing light emission pattern is emitted, and an emergency illumination state, the method comprising the steps of:
selecting the emergency illumination state for the at least one normally flashing exterior light, if the momentary value of the rate of descent exceeds the predetermined descent rate threshold value, and
controlling the at least one normally flashing exterior light to emit an emergency flashing light emission pattern different from the normal flashing light emission pattern in the emergency illumination state.

9. Method of autonomously operating an aircraft lighting system, the aircraft lighting system comprising at least one autonomously operated exterior aircraft light (6, 8, 10, 12, 14, 16, 18, 20, 22), with each of the at least one autonomously operated exterior aircraft light having at least two operating states, the method comprising the steps of:
determining a momentary value of at least one of a group of aircraft operation parameters consisting of height above ground, rate of descent, ground speed, and weight on wheels,
for each of the at least one autonomously operated exterior aircraft light, selecting a particular operating state from the at least two operating states depending on the momentary value of the at least one of the group of aircraft operation parameters, and
controlling each of the at least one autonomously operated exterior aircraft light in accordance with the particular operating state selected,
**characterised in that**
the at least one autonomously operated exterior aircraft light comprises at least one normally flashing exterior light, having a normal flashing state, in which a normal flashing light emission pattern is emitted, and an emergency illumination state, the method comprising the steps of:
determining the momentary value of the rate of descent,
comparing the momentary value of the rate of descent with a predetermined descent rate threshold value,
selecting the emergency illumination state for the at least one normally flashing exterior light, if the momentary value of the rate of descent exceeds the predetermined descent rate threshold value, and
controlling the at least one normally flashing exterior light to emit an emergency flashing light emission pattern different from the normal flashing light emission pattern in the emergency illumination state,
wherein the predetermined descent rate threshold value is between 15.24 m/s (3000 ft/min) and 35.56 m/s (7000 ft/min).

10. Method according to claim 9, wherein the at least one normally flashing exterior light is at least one of the group consisting of at least one anti-collision strobe light (18) and at least one anti-collision beacon light (20).

11. Method according to any of the preceding claims, wherein the predetermined descent rate threshold value is between 20.32 m/s (4000 ft/min) and 30.48 m/s (6000 ft/min).

12. Method according to any of the preceding claims, wherein the at least one autonomously operated exterior aircraft light comprises at least one landing light (22), having an on state and an off state.

13. Method according to claim 12, wherein the method comprises the steps of:
determining the momentary value of the height above ground,
comparing the momentary value of the height above ground with a predetermined height threshold value, in particular with a predetermined height threshold value of between 2438 m (8000 ft) and 3658 m (12000 ft),
selecting the on state for the at least one landing light, if the momentary value of the height above ground is below the predetermined height threshold value, and
controlling the at least one landing light to emit light in the on state.

14. Method according to claim 12 or 13, wherein the method comprises the steps of:
determining the momentary value of the weight on wheels and/or determining the momentary value of the ground speed,
deriving a ground contact indication from the momentary value of the weight on wheels and/or comparing the momentary value of the ground speed with a predetermined ground speed threshold value, in particular with a predetermined ground speed threshold value of between 5 m/s and 25 m/s,
selecting the off state for the at least one landing light, if the ground contact indication indicates ground contact and/or if the momentary value of the ground speed is below the predetermined ground speed threshold value, and
controlling the at least one landing light not to emit light in the off state.

15. Aircraft lighting system configured to carry out a method in accordance with any of the preceding claims.

## Patentansprüche

1. Verfahren zum autonomen Betreiben eines Luftfahrzeugbeleuchtungssystems, wobei das Luftfahrzeugbeleuchtungssystems mindestens eine autonom betriebene äußere Luftfahrzeugleuchte (6, 8, 10, 12, 14, 16, 18, 20, 22) umfasst, wobei jede der mindestens einen autonom betriebenen äußeren Luftfahrzeugleuchte mindestens zwei Betriebszustände aufweist, wobei das Verfahren die folgenden Schritte umfasst:
Feststellen eines momentanen Werts mindestens eines einer Gruppe von Luftfahrzeugbetriebsparametern, die aus der Höhe über dem Boden, der Sinkgeschwindigkeit, der Geschwindigkeit über Grund und der Radlast besteht,
für jede der mindestens einen autonom betriebenen äußeren Luftfahrzeugleuchte, Auswählen eines bestimmten Betriebszustands von den mindestens zwei Betriebszuständen in Abhängigkeit von dem momentanen Wert des mindestens einen der Gruppe von Luftfahrzeugbetriebsparametern, und
Steuern jeder der mindestens einen autonom betriebenen äußeren Luftfahrzeugleuchte gemäß dem ausgewählten bestimmten Betriebszustand,
**dadurch gekennzeichnet, dass**
die mindestens eine autonom betriebene äußere Luftfahrzeugleuchte mindestens eine normalerweise eingeschaltete äußere Leuchte umfasst, die einen normalen Ein-Zustand und einen Notfallblinkzustand aufweist, wobei das Verfahren folgende Schritte umfasst:
Feststellen des momentanen Werts der Sinkgeschwindigkeit, Vergleichen des momentanen Werts der Sinkgeschwindigkeit mit einem vorbestimmten Sinkgeschwindigkeitsschwellenwert,
Auswählen des Notfallblinkzustands für die mindestens eine normalerweise eingeschaltete äußere Leuchte, falls der momentane Wert der Sinkgeschwindigkeit den vorbestimmten Sinkgeschwindigkeitsschwellenwert überschreitet, und
Steuern der mindestens einen normalerweise eingeschalteten äußeren Leuchte, ein Blinklichtemissionsmuster in dem Notfallblinkzustand zu emittieren,
wobei der vorbestimmte Sinkgeschwindigkeitsschwellenwert zwischen 15,24 m/s (3000 ft/min) und 35,56 m/s (7000 ft/min) beträgt.

2. Verfahren nach Anspruch 1, wobei die mindestens eine normalerweise eingeschaltete äußere Leuchte mindestens eine aus der Gruppe ist, die aus mindestens einer Positionsleuchte (6) und mindestens einer Logoleuchte (8) besteht.

3. Verfahren nach Anspruch 1 oder 2, wobei die mindestens eine autonom betriebene äußere Luftfahrzeugleuchte mindestens eine normalerweise ausgeschaltete äußere Leuchte umfasst, die einen normalen Aus-Zustand und einen Notfallbeleuchtungszustand aufweist, wobei das Verfahren die folgenden Schritte umfasst:
Auswählen des Notfallbeleuchtungszustands für die mindestens eine normalerweise ausgeschaltete äußere Leuchte, falls der momentane Wert der Sinkgeschwindigkeit den vorbestimmten Sinkgeschwindigkeitsschwellenwert überschreitet.

4. Verfahren nach einem der vorhergehenden Ansprüche, wobei die mindestens eine autonom betriebene äußere Luftfahrzeugleuchte mindestens eine normalerweise blinkende äußere Leuchte umfasst, die einen normalen Blinkzustand, in dem ein normales Blinklichtemissionsmuster emittiert wird, und einen Notfallbeleuchtungszustand aufweist, wobei das Verfahren die folgenden Schritte umfasst:
Auswählen des Notfallbeleuchtungszustands für die normalerweise blinkende äußere Leuchte, falls der momentane Wert der Sinkgeschwindigkeit den vorbestimmten Sinkgeschwindigkeitsschwellenwert überschreitet, und
Steuern der mindestens einen normalerweise blinkenden äußeren Leuchte, ein Notfallblinklichtemissionsmuster in dem Notfallbeleuchtungszustand zu emittieren, das sich von dem normalen Blinklichtemissionsmuster unterscheidet.

5. Verfahren zum autonomen Betreiben eines Luftfahrzeugbeleuchtungssystems, wobei das Luftfahrzeugbeleuchtungssystem mindestens eine autonom betriebene äußere Luftfahrzeugleuchte (6, 8, 10, 12, 14, 16, 18, 20, 22) umfasst, wobei jede der mindestens einen autonom betriebenen äußeren Luftfahrzeugleuchte mindestens zwei Betriebszustände aufweist, wobei das Verfahren die folgenden Schritte umfasst:
Feststellen eines momentanen Werts mindestens eines einer Gruppe von Luftfahrzeugbetriebsparametern, die aus der Höhe über dem Boden, der Sinkgeschwindigkeit, der Geschwindigkeit über Grund und der Radlast besteht,
für jede der mindestens einen autonom betriebenen äußeren Luftfahrzeugleuchte, Auswählen eines bestimmten Betriebszustands aus den mindestens zwei Betriebszuständen in Abhängigkeit von dem momentanen Wert des mindestens einen der Gruppe von Luftfahrzeugbetriebsparametern, und
Steuern jeder der mindestens einen autonom betriebenen äußeren Luftfahrzeugleuchte gemäß dem ausgewählten bestimmten Betriebszustand,
**dadurch gekennzeichnet, dass**
die mindestens eine autonom betriebene äußere Luftfahrzeugleuchte mindestens eine normalerweise ausgeschaltete äußere Leuchte umfasst, die einen normalen Aus-Zustand und einen Notfallbeleuchtungszustand aufweist,
wobei das Verfahren folgende Schritte umfasst:
Feststellen des momentanen Werts der Sinkgeschwindigkeit, Vergleichen des momentanen Werts der Sinkgeschwindigkeit mit einem vorbestimmten Sinkgeschwindigkeitsschwellenwert,
Auswählen des Notfallbeleuchtungszustands für die mindestens eine normalerweise ausgeschaltete äußere Leuchte, falls der momentane Wert der Sinkgeschwindigkeit den vorbestimmten Sinkgeschwindigkeitsschwellenwert überschreitet, und
Steuern der mindestens einen normalerweise ausgeschalteten äußeren Leuchte, dauerhaft Licht in dem Notfallbeleuchtungszustand zu emittieren, oder Steuern der mindestens einen normalerweise ausgeschalteten äußeren Leuchte, ein Blinklichtemissionsmuster in dem Notfallbeleuchtungszustand zu emittieren,
wobei der vorbestimmte Sinkgeschwindigkeitsschwellenwert zwischen 15,24 m/s (3000 ft/min) und 35,56 m/s (7000 ft/min) beträgt.

6. Verfahren nach Anspruch 5, wobei die mindestens eine normalerweise ausgeschaltete äußere Leuchte mindestens eine aus der Gruppe ist, die aus mindestens einer Flügelüberprüfungsleuchte (10), mindestens einer Triebwerküberprüfungsleuchte (12), mindestens einer Landebahn-Kurvenleuchte (14) und mindestens einer Frachtladeleuchte (16) besteht.

7. Verfahren nach Anspruch 5 oder 6, wobei die mindestens eine autonom betriebene, normalerweise ausgeschaltete äußere Luftfahrzeugleuchte mindestens eine normalerweise eingeschaltete äußere Leuchte umfasst, die einen normalen Ein-Zustand und einen Notfallblinkzustand aufweist, wobei das Verfahren folgende Schritte umfasst:
Auswählen des Notfallblinkzustands für die mindestens eine normalerweise eingeschaltete äußere Leuchte, falls der momentane Wert der Sinkgeschwindigkeit den vorbestimmten Sinkgeschwindigkeitsschwellenwert überschreitet, und
Steuern der mindestens einen normalerweise eingeschalteten äußeren Leuchte, ein Blinklichtemissionsmuster in dem Notfallblinkzustand zu emittieren.

8. Verfahren nach einem der Ansprüche 5 bis 7, wobei die mindestens eine autonom betriebene äußere Luftfahrzeugleuchte mindestens eine normalerweise blinkende äußere Leuchte umfasst, die einen normalen Blinkzustand, in dem ein normales Blinklichtemissionsmuster emittiert wird, und einen Notfallbeleuchtungszustand aufweist, wobei das Verfahren folgende Schritte umfasst:
Auswählen des Notfallbeleuchtungszustands für die mindestens eine normalerweise blinkende äußere Leuchte, falls der momentane Wert der Sinkgeschwindigkeit den vorbestimmten Sinkgeschwindigkeitsschwellenwert überschreitet, und
Steuern der mindestens einen normalerweise blinkenden äußeren Leuchte, ein Notfallblinklichtemiisionsmuster in dem Notfallbeleuchtungszustand zu emittieren, das sich von dem normalen Blinklichtemissionsmuster unterscheidet.

9. Verfahren zum autonomen Betreiben eines Luftfahrzeugbeleuchtungssystems, wobei das Luftfahrzeugbeleuchtungssystem mindestens eine autonom betriebene äußere Luftfahrzeugleuchte (6, 8, 10, 12, 14, 16, 18, 20, 22) umfasst, wobei jede der mindestens einen autonom betriebenen äußeren Luftfahrzeugleuchte mindestens zwei Betriebszustände aufweist, wobei das Verfahren die folgenden Schritte umfasst:
Feststellen eines momentanen Werts mindestens eines einer Gruppe von Luftfahrzeugbetriebsparametern, die aus der Höhe über dem Boden, der Sinkgeschwindigkeit, der Geschwindigkeit über Grund und der Radlast besteht,
für jede der mindestens einen äußeren Luftfahrzeugleuchte, Auswählen eines bestimmten Betriebszustands aus den mindestens zwei Betriebszuständen in Abhängigkeit von dem momentanen Wert des mindestens einen der Gruppe von Luftfahrzeugbetriebsparametern, und
Steuern jeder der mindestens einen autonomen äußeren Luftfahrzeugleuchte gemäß dem ausgewählten bestimmten Betriebszustand,
**dadurch gekennzeichnet, dass**
die mindestens eine autonom betriebene äußere Luftfahrzeugleuchte mindestens eine normalerweise blinkende äußere Leuchte umfasst, die einen normalen Blinkzustand, in dem ein normales Blinklichtemissionsmuster emittiert wird, und einen Notfallbeleuchtungszustand aufweist, wobei das Verfahren folgende Schritte umfasst:
Feststellen des momentanen Werts der Sinkgeschwindigkeit, Vergleichen des momentanen Werts der Sinkgeschwindigkeit mit einem vorbestimmten Sinkgeschwindigkeitsschwellenwert, Auswählen des Notfallbeleuchtungszustands für die mindestens eine normalerweise blinkende äußere Leuchte, falls der momentane Wert der Sinkgeschwindigkeit den vorbestimmten Sinkgeschwindigkeitsschwellenwert überschreitet, und
Steuern der mindestens einen normalerweise blinkenden äußeren Leuchte, ein Blinklichtemissionsmuster in dem Notfallbeleuchtungszustand zu emittieren, das sich von dem normalen Blinklichtemissionsmuster unterscheidet,
wobei der vorbestimmte Sinkgeschwindigkeitsschwellenwert zwischen 15,24 m/s (3000 ft/min) und 35,56 m/s (7000 ft/min) beträgt.

10. Verfahren nach Anspruch 9, wobei die mindestens eine normalerweise blinkende äußere Leuchte mindestens eine aus der Gruppe ist, die aus mindestens einer Zusammenstoß-Vermeidungs-Stroboskopleuchte (18) und mindestens einer Zusammenstoß-Vermeidungs-Leuchtfeuer-Leuchte (20) besteht.

11. Verfahren nach einem der vorhergehenden Ansprüche, wobei der vorbestimmte Sinkgeschwindigkeitsschwellenwert zwischen 20,32 m/s (4000 ft/min) und 30,48 m/s (6000 ft/min) beträgt.

12. Verfahren nach einem der vorhergehenden Ansprüche, wobei die mindestens eine autonom betriebene äußere Luftfahrzeugleuchte mindestens einen Landescheinwerfer (22) umfasst, der einen Ein- und einen Aus-Zustand aufweist.

13. Verfahren nach Anspruch 12, wobei das Verfahren die folgenden Schritte umfasst:
Feststellen des momentanen Werts der Höhe über dem Boden, Vergleichen des momentanen Werts der Höhe über dem Boden mit einem vorbestimmten Höhenschwellenwert, insbesondere mit einem vorbestimmten Höhenschwellenwert von zwischen 2438 m (8000 ft) und 3658 m (12000 ft),
Auswählen des Ein-Zustands für den mindestens einen Landescheinwerfer, falls der momentane Wert der Höhe über dem Boden unter dem vorbestimmten Höhenschwellenwert liegt, und
Steuern des mindestens einen Landescheinwerfers, Licht in dem Ein-Zustand zu emittieren.

14. Verfahren nach Anspruch 12 oder 13, wobei das Verfahren die folgenden Schritte umfasst:
Feststellen des momentanen Werts der Radlast und/oder Feststellen des momentanen Werts der Geschwindigkeit über Grund,
Ableiten eines Bodenkontakthinweises von dem momentanen Wert der Radlast und/oder Vergleichen des momentanen Werts der Geschwindigkeit über Grund mit einem vorbestimmten Schwellenwert für die Geschwindigkeit über Grund, insbesondere mit einem vorbestimmten Schwellenwert für die Geschwindigkeit über Grund von zwischen 5 m/s und 25 m/s, Auswählen des Aus-Zustands für den mindestens einen Landescheinwerfer, falls der Bodenkontakthinweis auf einen Bodenkontakt hinweist und/oder falls der momentane Wert der Geschwindigkeit über Grund unter dem vorbestimmten Schwellenwert für die Geschwindigkeit über Grund liegt, und
Steuern des mindestens einen Landescheinwerfers, in dem Aus-Zustand kein Licht zu emittieren.

15. Luftfahrzeugbeleuchtungssystem, das konfiguriert ist, ein Verfahren nach einem der vorhergehenden Ansprüche auszuführen.

## Revendications

1. Procédé de fonctionnement autonome d'un système d'éclairage d'aéronef, le système d'éclairage d'aéronef comprenant au moins une lumière extérieure d'aéronef à fonctionnement autonome (6, 8, 10, 12, 14, 16, 18, 20, 22), avec chacune de l'au moins une lumière extérieure d'aéronef à fonctionnement autonome ayant au moins deux états de fonctionnement, le procédé comprenant les étapes de :
détermination d'une valeur momentanée d'au moins un parmi un groupe de paramètres de fonctionnement d'aéronef constitué de la hauteur au-dessus du sol, de la vitesse de descente, de la vitesse au sol, et du poids sur roues,
pour chacune de l'au moins une lumière extérieure d'aéronef à fonctionnement autonome, sélection d'un état de fonctionnement particulier des au moins deux états de fonctionnement en fonction de la valeur momentanée de l'au moins un parmi le groupe de paramètres de fonctionnement d'aéronef, et
commande de chacune de l'au moins une lumière extérieure d'aéronef à fonctionnement autonome en fonction de l'état de fonctionnement particulier sélectionné,
**caractérisé en ce que**
l'au moins une lumière extérieure d'aéronef à fonctionnement autonome comprend au moins une lumière extérieure normalement allumée, ayant un état de marche normal et un état de clignotement d'urgence, le procédé comprenant les étapes de :
détermination de la valeur momentanée de la vitesse de descente,
comparaison de la valeur momentanée de la vitesse de descente avec une valeur seuil de vitesse de descente prédéterminée,
sélection de l'état de clignotement d'urgence pour l'au moins une lumière extérieure normalement allumée, si la valeur momentanée de la vitesse de descente dépasse la valeur seuil de vitesse de descente prédéterminée, et
commande de l'au moins une lumière extérieure normalement allumée pour émettre un motif d'émission de lumière clignotante dans l'état de clignotement d'urgence,
dans lequel la valeur seuil de vitesse de descente prédéterminée est entre 15,24 m/s (3 000 pieds/min) et 35,56 m/s (7 000 pieds/min).

2. Procédé selon la revendication 1, dans lequel l'au moins une lumière extérieure normalement allumée est au moins une du groupe constitué d'au moins une lumière de navigation (6) et d'au moins une lumière logo (8).

3. Procédé selon la revendication 1 ou 2, dans lequel l'au moins une lumière extérieure d'aéronef à fonctionnement autonome comprend au moins une lumière extérieure normalement éteinte, ayant un état d'arrêt normal et un état d'éclairage d'urgence, le procédé comprenant l'étape de :
sélection de l'état d'éclairage d'urgence pour l'au moins une lumière extérieure normalement éteinte, si la valeur momentanée de la vitesse de descente dépasse la valeur seuil de vitesse de descente prédéterminée.

4. Procédé selon l'Une quelconque des revendications précédentes, dans lequel l'au moins une lumière extérieure d'aéronef à fonctionnement autonome comprend au moins une lumière extérieure normalement clignotante, ayant un état de clignotement normal, dans lequel un motif d'émission de lumière clignotante normal est émis, et un état d'éclairage d'urgence, le procédé comprenant les étapes de :
sélection de l'état d'éclairage d'urgence pour l'au moins une lumière extérieure normalement clignotante, si la valeur momentanée de la vitesse de descente dépasse la valeur seuil de vitesse de descente prédéterminée, et
commande de l'au moins une lumière extérieure normalement clignotante pour émettre un motif d'émission de lumière clignotante d'urgence différent du motif d'émission de lumière clignotante normal dans l'état d'éclairage d'urgence.

5. Procédé de fonctionnement autonome d'un système d'éclairage d'aéronef, le système d'éclairage d'aéronef comprenant au moins une lumière extérieure d'aéronef à fonctionnement autonome (6, 8, 10, 12, 14, 16, 18, 20, 22), avec chacune de l'au moins une lumière extérieure d'aéronef à fonctionnement autonome ayant au moins deux états de fonctionnement, le procédé comprenant les étapes de :
détermination d'une valeur momentanée d'au moins un parmi un groupe de paramètres de fonctionnement d'aéronef constitué de la hauteur au-dessus du sol, de la vitesse de descente, de la vitesse au sol, et du poids sur roues,
pour chacune de l'au moins une lumière extérieure d'aéronef à fonctionnement autonome, sélection d'un état de fonctionnement particulier des au moins deux états de fonctionnement en fonction de la valeur momentanée de l'au moins un parmi le groupe de paramètres de fonctionnement d'aéronef, et
commande de chacune de l'au moins une lumière extérieure d'aéronef à fonctionnement autonome en fonction de l'état de fonctionnement particulier sélectionné,
**caractérisé en ce que**
l'au moins une lumière extérieure d'aéronef à fonctionnement autonome comprend au moins une lumière extérieure normalement éteinte, ayant un état d'arrêt normal et un état d'éclairage d'urgence, le procédé comprenant les étapes de :
détermination de la valeur momentanée de la vitesse de descente,
comparaison de la valeur momentanée de la vitesse de descente avec une valeur seuil de vitesse de descente prédéterminée,
sélection de l'état d'éclairage d'urgence pour l'au moins une lumière extérieure normalement éteinte, si la valeur momentanée de la vitesse de descente dépasse la valeur seuil de vitesse de descente prédéterminée, et
commande de l'au moins une lumière extérieure normalement éteinte pour émettre continuellement de la lumière dans l'état d'éclairage d'urgence ou commande de l'au moins une lumière extérieure normalement éteinte pour émettre un motif d'émission de lumière clignotante dans l'état d'éclairage d'urgence,
dans lequel la valeur seuil de vitesse de descente prédéterminée est entre 15,24 m/s (3 000 pieds/min) et 35,56 m/s (7 000 pieds/min).

6. Procédé selon la revendication 5, dans lequel l'au moins une lumière extérieure normalement éteinte est au moins une du groupe constitué d'au moins une lumière de balayage d'aile (10), d'au moins une lumière de balayage de moteur (12), d'au moins une lumière de virage sur piste (14), et d'au moins une lumière de cargaison (16).

7. Procédé selon la revendication 5 ou 6, dans lequel l'au moins une lumière extérieure d'aéronef à fonctionnement autonome comprend au moins une lumière extérieure normalement allumée, ayant un état de marche normal et un état de clignotement d'urgence, le procédé comprenant les étapes de :
sélection de l'état de clignotement d'urgence pour l'au moins une lumière extérieure normalement allumée, si la valeur momentanée de la vitesse de descente dépasse la valeur seuil de vitesse de descente prédéterminée, et
commande de l'au moins une lumière extérieure normalement allumée pour émettre un motif d'émission de lumière clignotante dans l'état de clignotement d'urgence.

8. Procédé selon l'une quelconque des revendications 5 à 7, dans lequel l'au moins une lumière extérieure d'aéronef à fonctionnement autonome comprend au moins une lumière extérieure normalement clignotante, ayant un état de clignotement normal, dans lequel un motif d'émission de lumière clignotante normal est émis, et un état d'éclairage d'urgence, le procédé comprenant les étapes de :
sélection de l'état d'éclairage d'urgence pour l'au moins une lumière extérieure normalement clignotante, si la valeur momentanée de la vitesse de descente dépasse la valeur seuil de vitesse de descente prédéterminée, et
commande de l'au moins une lumière extérieure normalement clignotante pour émettre un motif d'émission de lumière clignotante d'urgence différent du motif d'émission de lumière clignotante normal dans l'état d'éclairage d'urgence.

9. Procédé de fonctionnement autonome d'un système d'éclairage d'aéronef, le système d'éclairage d'aéronef comprenant au moins une lumière extérieure d'aéronef à fonctionnement autonome (6, 8, 10, 12, 14, 16, 18, 20, 22), avec chacune de l'au moins une lumière extérieure d'aéronef à fonctionnement autonome ayant au moins deux états de fonctionnement, le procédé comprenant les étapes de :
détermination d'une valeur momentanée d'au moins un parmi un groupe de paramètres de fonctionnement d'aéronef constitué de la hauteur au-dessus du sol, de la vitesse de descente, de la vitesse au sol, et du poids sur roues,
pour chacune de l'au moins une lumière extérieure d'aéronef à fonctionnement autonome, sélection d'un état de fonctionnement particulier des au moins deux états de fonctionnement en fonction de la valeur momentanée de l'au moins un parmi le groupe de paramètres de fonctionnement d'aéronef, et
commande de chacune de l'au moins une lumière extérieure d'aéronef à fonctionnement autonome en fonction de l'état de fonctionnement particulier sélectionné,
**caractérisé en ce que**
l'au moins une lumière extérieure d'aéronef à fonctionnement autonome comprend au moins une lumière extérieure normalement clignotante, ayant un état de clignotement normal, dans lequel un motif d'émission de lumière clignotante normal est émis, et un état d'éclairage d'urgence, le procédé comprenant les étapes de :
détermination de la valeur momentanée de la vitesse de descente,
comparaison de la valeur momentanée de la vitesse de descente avec une valeur seuil de vitesse de descente prédéterminée,
sélection de l'état d'éclairage d'urgence pour l'au moins une lumière extérieure normalement clignotante, si la valeur momentanée de la vitesse de descente dépasse la valeur seuil de vitesse de descente prédéterminée, et
commande de l'au moins une lumière extérieure normalement clignotante pour émettre un motif d'émission de lumière clignotante d'urgence différent du motif d'émission de lumière clignotante normal dans l'état d'éclairage d'urgence,
dans lequel la valeur seuil de vitesse de descente prédéterminée est entre 15,24 m/s (3 000 pieds/min) et 35,56 m/s (7 000 pieds/min).

10. Procédé selon la revendication 9, dans lequel l'au moins une lumière extérieure normalement clignotante est au moins une du groupe constitué d'au moins une lumière stroboscopique anticollision (18) et d'au moins une lumière balise anticollision (20).

11. Procédé selon l'une quelconque des revendications précédentes, dans lequel la valeur seuil de vitesse de descente prédéterminée est entre 20,32 m/s (4 000 pieds/min) et 30,48 m/s (6 000 pieds/min).

12. Procédé selon l'une quelconque des revendications précédentes, dans lequel l'au moins une lumière extérieure d'aéronef à fonctionnement autonome comprend au moins une lumière d'atterrissage (22), ayant un état marche et un état arrêt.

13. Procédé selon la revendication 12, dans lequel le procédé comprend les étapes de :
détermination de la valeur momentanée de la hauteur au-dessus du sol,
comparaison de la valeur momentanée de la hauteur au-dessus du sol avec une valeur seuil de hauteur prédéterminée, en particulier avec une valeur seuil de hauteur prédéterminée entre 2438 m (8000 pieds) et 3658 m (12 000 pieds),
sélection de l'état allumé pour l'au moins une lumière d'atterrissage, si la valeur momentanée de la hauteur au-dessus du sol est inférieure à la valeur seuil de hauteur prédéterminée, et
commande de l'au moins une lumière d'atterrissage pour émettre de la lumière dans l'état marche.

14. Procédé selon la revendication 12 ou 13, dans lequel le procédé comprend les étapes de :
détermination de la valeur momentanée du poids sur roues et/ou détermination de la valeur momentanée de la vitesse au sol,
déduction d'une indication de contact avec le sol à partir de la valeur momentanée du poids sur roues et/ou comparaison de la valeur momentanée de la vitesse au sol avec une valeur seuil de vitesse au sol prédéterminée, en particulier avec une valeur seuil de vitesse au sol prédéterminée entre 5 m/s et 25 m/s,
sélection de l'état d'arrêt pour l'au moins une lumière d'atterrissage, si l'indication de contact avec le sol indique un contact avec le sol et/ou si la valeur momentanée de la vitesse au sol est inférieure à la valeur seuil de vitesse au sol prédéterminée, et
commande de l'au moins une lumière d'atterrissage pour ne pas émettre de lumière dans l'état d'arrêt.

15. Système d'éclairage d'aéronef configuré pour exécuter un procédé selon l'une quelconque des revendications précédentes.
